# EUROPEAN PATENT SPECIFICATION

(11) **EP 2 882 167 B1**
(45) Date of publication and mention of the grant of the patent: **14.08.2019**
(21) Application number: 13196114.6
(22) Date of filing: 06.12.2013
(51) Int. Cl.: H04L 29/12, H04L 12/28

(54) **METHOD FOR MANAGEMENT OF IP (INTERNET PROTOCOL) ADDRESSES IN A TELECOMMUNICATIONS NETWORK, AND TELECOMMUNICATIONS NETWORK**
VERFAHREN FÜR DIE VERWALTUNG VON IP (INTERNETPROTOKOLL)-ADRESSEN IN EINEM TELEKOMMUNIKATIONSNETZ, UND TELEKOMMUNIKATIONSNETZ
PROCÉDÉ DE GESTION D'ADRESSES IP (PROTOCOLE INTERNET) DANS UN RÉSEAU DE TÉLÉCOMMUNICATIONS ET RÉSEAU DE TÉLÉCOMMUNICATIONS

(43) Date of publication of application: 10.06.2015
(73) Proprietor: Deutsche Telekom AG, 53113 Bonn (DE)
(72) Inventor: Sivchenko, Dmitry, 64285 Darmstadt (DE); Orth, Bruno, 53639 Königswinter (DE)
(74) Representative: Schwöbel, Thilo K.

(56) References cited:
- US-A1- 2005 076 144
- US-A1- 2008 101 353
- US-B1- 7 185 079
- HUBBARD M KOSTERS INTERNIC D CONRAD APNIC D KARRENBERG RIPE J POSTEL ISI K: "INTERNET REGISTRY IP ALLOCATION GUIDELINES; rfc2050.txt", NETWORK WORKING GROUP RFC 1717, INTERNET SOCIETY (ISOC) 4, RUE DES FALAISES CH- 1205 GENEVA, SWITZERLAND, CH, 1 November 1996 (1996-11-01), XP015007834, ISSN: 0000-0003

## Description

### BACKGROUND

The present invention relates inter alia to a method for an enhanced management of Internet Protocol (IP) addresses in a telecommunications network, the telecommunications network comprising a backbone, and a plurality of access nodes in order to provide IP connectivity to a plurality of customer premise equipments connected to the telecommunications network via the access nodes, wherein the IP addresses for usage by customer premise equipments are provided to the access nodes by an IP address manager, wherein the number of IP addresses, required by one access node of the plurality of access nodes, varies in time, wherein, as a result, IP addresses are allocated to and de-allocated from the one access node of the plurality of access nodes by the IP address manager dependent on the variation in time of the IP addresses requested by the access node.

Furthermore, the present invention relates to a telecommunications network for an enhanced management of Internet Protocol (IP) addresses, the telecommunications network comprising a backbone, and a plurality of access nodes in order to provide IP connectivity to a plurality of customer premise equipments connected to the telecommunications network via the access nodes, wherein the IP addresses are provided to the access nodes by an IP address manager, wherein the number of IP addresses, required by one access node of the plurality of access nodes, varies in time, wherein, as a result, IP addresses are allocated to and de-allocated from the one access node of the plurality of access nodes by the IP address manager dependent on the variation in time of the IP addresses requested by the access node.

In most telecommunications networks, especially carrier-grade access networks like xDSL, user devices (also called customer premise equipment, CPE) first request and then receive a public IP address for their IP connectivity. In the context of the present invention, the term "IP address" or "IP addresses" mainly refer to IPv4 (Internet Protocol Version 4) IP addresses.

IP devices within the (typically private) local area network (LAN) of the user or subscriber to the telecommunications network typically have private IP addresses which are NAPted in the CPE (by means of an NAT, network address translation) for the communication with IP systems in the public Internet. To serve more users or subscribers, more IP addresses are needed. In case that there are no more public IPv4 addresses available in the address pool (assigned to the operator of the telecommunications network), no more users can get IP connectivity. In case further CPEs are connected to an access node with exhausted IP address pool, these CPEs cannot be provided with Internet connectivity while operator generally can still have available IP addresses (e.g. not used on other access nodes).

To circumvent this problem, there are known solutions available such as native NAT, DS-Lite, Leightweighted DS-Lite, that provide for a sharing of a given IP address for usage by multiple users, i.e. for usage by multiple CPE or subscribers. This results in the beneficial situation that connectivity to the Internet (via the telecommunications network) can then be provided to more users (or CPEs). It is typical for such cases that a user has does not have a complete port range of its IP address (i.e. the complete range of 2^16 ports, hence ports 0-65535), but just a part of that port range.

However, this method or these methods of IP address sharing has important drawbacks in comparison to providing a complete public IP address to users.

The most of current requirements on carrier-grade telecommunications networks that are implemented in real-life access networks are designed under the assumption that one public IP address belongs (completely) to a unique user (or CPE) without any sharing among multiple network users. Examples of such requirements include, but are not limited to situations or cases of emergency (in such cases, the user location is found based on its (unique) IP address) or lawful Interception (the traffic of a user which is identified by a (uniquely known) IP address is intercepted).

A further drawback of IP addresses sharing is that most of network applications and services likewise have this same assumption (that one public IP address belongs (completely) to a unique user (or CPE) without any sharing among multiple network users), e.g. web-browsing works by default with port 80 or incoming ssh connections are typically received over port 22. A further example is the Dynamic DNS service, resolving a domain name to an IP address without any additions, i.e. normally taking into consideration a port range that would be necessary in case DynDNS user has just a range of ports of its IP address. Patent application US 2008/101353 A1 and document RFC 2050, XP015007834, disclose the allocation policies of block of IP addresses to an access node.

### SUMMARY

An object of the present invention is to provide a method for an enhanced management of Internet Protocol (IP) addresses in a telecommunications network, such that the dynamic distribution of IP address blocks, especially among layer 3 access nodes (L3AN), is further adapted to the actual needs of the different users of the telecommunications network, and the management thereof (requests and releases of IP addresses) simplified, resulting in a more effective usage of the IP addresses of the telecommunications network.

The object of the present invention is achieved by the method of independent claim 1, the telecommunications network of independent claim 7, the program of independent claim 8 and the computer program product of independent claim 9. Optional features of the invention are defined by the appended dependent claims 2-6.

According to the present invention it is thereby advantageously possible to enable an efficient IP address management in access networks, especially in carrier-grade access networks, by using a dynamic distribution of IP address blocks among access nodes of a given network layer, especially among layer 3 access nodes.

According to a first alternative embodiment of a telecommunications network, especially an access network, according to the present invention, access nodes - at least partly - provide the management of locally allocated IP addresses themselves and in accordance with a central (or at least superordinated) IP address manager. In the first alternative of the present invention, in the first step, the access node (of the plurality of access nodes) detects that additional IP addresses are required or will be required for the customer premise equipments connected or possibly going to be connected to the telecommunications network via the access node.

According to a second alternative embodiment of a telecommunications network, especially an access network, according to the present invention, the management of IP addresses allocated to an access node is almost completely provided by the central IP address manager, such an IP address manager then acting as a central DHCP server (Dynamic Host Configuration Protocol) with DHCP relays in the access nodes. In the second alternative, in a first step, the IP address manager (i.e. the central DHCP server) detects that additional IP addresses are required or will be required for the customer premise equipments connected or possibly going to be connected to the telecommunications network via the access node,

The request and release of dynamic address blocks of IP addresses is performed by the access nodes (typically L3 access nodes) themselves. Such a method saves planning costs for address planning of every (L3) access node and ensures that users get IP connectivity provided that there are more IP addresses available than users. Moreover such a method realizes minimal waste of IP addresses (i.e. the situation that unused IP addresses are available at one (L3) access node (or a plurality of (L3) access nodes) while another or a plurality of other (L3) access nodes do not have enough IP addresses to serve all users) by using an appropriate size of IP address blocks, especially of dynamic address blocks.

Typically, the number of IP addresses, required by one access node of the plurality of access nodes - especially a plurality of access nodes of a given layer of access networks in the telecommunications network - varies in time. Due to the shortage of IPv4 IP addresses, providers of telecommunications networks typically need to distribute their available IP addresses among the access nodes of a given layer within the access network such that - at least approximately - the number of IP addresses allocated to one access node of the plurality of access nodes corresponds to the number of users or subscribers in the subnet of that access node that need - at a given point in time - an IP address. At another point in time, more active users might require IP addresses in another geographical area being served by another access node of the plurality of access node (of the given layer of access nodes of the telecommunications network), resulting in a need to allocate more IP addresses to this other access node. Therefore - due to the scarcity of IPv4 IP addresses -, IP addresses need to be allocated and de-allocated to and from the different access nodes (typically of a plurality of access nodes of a given layer within the telecommunications network). This allocation and de-allocation is typically performed by an IP address manager (normally associated to the given layer of access nodes within the telecommunications network). The IP address manager distributes the available IP addresses among the access nodes of the given layer of the telecommunications network such that in each subnet, served by a different access node of the given layer of access nodes (i.e. the plurality of access nodes), (ideally) a number of IP addresses can be used that corresponds to (or is slightly higher than) the number of required IP addresses (within that subnet of the telecommunications network). According to the first alternative embodiment, the IP address manager manages and allocates (or de-allocates) IP addresses to the different access nodes in response to requests received from the access nodes (i.e. there the access nodes - at least partly - provide the management of locally allocated IP addresses themselves and in accordance with the central (or at least superordinated) IP address manager). In this frist alternative, the detection of the need for additional IP addresses is detected by the access nodes and a request (IP addresses allocation request) transmitted to the IP address manager. According to the second alternative embodiment, the management of IP addresses (allocated or de-allocated to an access node) is almost completely provided by the central IP address manager (or central DHCP server). In this second alternative, the detection of the need for additional IP addresses (for a specific access node) is detected by the IP address manager, and hence no request (IP addresses allocation request) is transmitted to the IP address manager. However, if the functionality of the DHCP relays (located with one or a plurality of access nodes) is associated to the respective access node or access nodes and the communication between the DHCP relays and the DHCP server (i.e. the IP address manager) is understood as a request indicating a need for additional IP addresses, then also in the second alternative, there is a request (IP addresses allocation request) transmitted to the IP address manager (i.e. the DHCP server).

According to the present invention, this is implemented by means of (in a first step) detecting (typically by an access node of the plurality of access nodes or by a DHCP relay part of the access node or associated to the access node) that additional IP addresses are required or will be required within that subnet, i.e. typically for the customer premise equipments connected or possibly going to be connected to the telecommunications network via the access node. Furthermore (in a second step), the one access node (or the DHCP relay part of the access node or associated to the access node) sends an IP addresses allocation request to the IP address manager for allocation of additional IP addresses (or the IP address manager detects the need for additional IP addresses at the access node). According to the present invention, the IP addresses allocation request includes an indication related to the increase per time interval of required IP addresses at the access node, i.e. the speed at which additional IP addresses are required at that access node (or the detected need for additional IP addresses at the access node includes the detection of the increase per time interval of required IP addresses at the access node). The subsequent allocation of additional IP addresses (in a third step) to that access node is performed by the IP address manager dependent on the IP addresses allocation request, i.e. in case that a higher speed of the need of additional IP addresses is detected, the access node receives a higher number of additional IP addresses (typically by means of using a higher number of so-called blocks of IP addresses and/or by means of allocating a larger block of IP addresses (i.e. having a higher number of IP addresses within the block)).

According to the present invention, the telecommunications network (used in the inventive method) is a telecommunications network typically comprising a backbone, and a plurality of access nodes in order to provide IP connectivity to a plurality of customer premise equipments connected to the telecommunications network. The customer premise equipments are connected to the telecommunications network by means of typically different layers of access nodes, e.g. layer 2 access nodes and layer 3 access nodes, wherein the layer 2 access nodes are typically nearer to the customer premise equipments than the layer 3 access nodes.

According to the present invention, it is preferred that the IP addresses allocation request is sent to the IP address manager in case that an increase of required IP addresses is detected by the one access node of the plurality of access nodes, above a predetermined threshold of an IP address usage level by the access node.

Thereby it is advantageously possible that at any time
-- on the one hand sufficient IP addresses are available to be used by the access node concerned in order to be able to provide IP connectivity to the connected devices in the subnet of the telecommunications network served by the access node concerned, and
-- on the other hand no IP addresses or, to be more precise, no too much IP addresses are allocated to the concerned access node but not used (because they are not requested by the connected devices in the subnet of the telecommunications network served by the access node concerned. The predetermined threshold corresponds, e.g., to approximately 60% and/or to approximately 70% and/or to approximately 75% and/or to approximately 80% and/or to approximately 85% and/or to approximately 90% and/or to approximately 95% (also depending, e.g., on the kind of access node and/or on the kind and/or size of the subnet served by the access node) of the available IP addresses at the concerned access node. According to the present invention, it is advantageously possible to define a higher threshold as in conventionally known access networks. This is because at the beginning of periods of heavy use of IP connectivity in a subnet of the concerned access node, there is a comparably steep increase of IP addresses required (comparably high "speed" of increase of required IP addresses) by the connected devices (customer premise equipment) in the concerned subnet of the telecommunications network served by the access node. The predetermined threshold being less than 100% of the available IP addresses at the concerned access node (which is equivalent to a certain number of unused IP addresses allocated to the concerned access node) aims at serving such new requests of additional IP addresses in a fast manner (as a certain delay time has to be considered between the start of the allocation of new IP addresses to an access node and such new allocated IP addresses being operational or being able to be used by the subscribers or users.

Furthermore, it is preferred according to the present invention that the IP addresses allocated by the IP address manager to the plurality of access nodes are organized in blocks of IP addresses, each block of IP addresses comprising one IP address or a plurality of IP addresses, wherein the blocks preferably comprise a number of IP addresses corresponding to a power of 2 (i.e. 2^n where n is zero or a positive integer), e.g. 1 or 2 or 4 or 8 or 16 or 32 or 64 or 128 or 256 or 512 or 1024 or 2048 or 4096 or 8192 or 16384.

By means of using blocks of IP addresses, it is advantageously possible according to the present invention that the process of allocation of new or additional IP addresses to a concerned access node can be rendered more efficient as at a same time or during the same time interval several allocation procedures as well as further processes can be performed for the plurality of IP addresses comprised by the block of IP addresses.

According to a further embodiment of the present invention (than can be combined with any other embodiment of the present invention), different blocks of IP addresses comprise different numbers of IP addresses such that blocks of IP addresses with at least two different numbers of IP addresses exist. This means that such blocks of IP addresses can have different numbers of IP addresses. According to the present invention, it is preferred that the blocks of IP addresses preferably comprise a number of IP addresses corresponding to a power of 2, e.g. 1 or 2 or 4 or 8 or 16 or 32 or 64 or 128 or 256 or 512 or 1024 or 2048 or 4096 or 8192 or 16384.

Furthermore according to the present invention, depending on
-- either the IP addresses allocation request, and especially depending on the indication related to the speed of increase of required IP addresses (or related to the increase per time interval of required IP addresses) at the one access node of the plurality of access nodes, or
-- the IP address manager detecting the evolution of the use of IP addresses by the one access node of the plurality of access nodes, especially the speed of increase of required IP addresses at the access node,
IP addresses are additionally allocated to the access node (120) by the IP address manager, the additionally allocated IP addresses comprising:
-- a variable number of blocks of IP addresses or
-- a block of IP addresses comprising a variable number of IP addresses.

Thereby, it is advantageously possible according to the present invention that more additional IP addresses are allocated to the concerned access node in case that the speed of increase of required IP addresses (or the increase per time interval of required IP addresses) is comparably high (such as above a predefined threshold). Furthermore, it is advantageously possible according to the present invention that less additional IP addresses are allocated to the concerned access node in case that the speed of increase of required IP addresses (or the increase per time interval of required IP addresses) is comparably low (such as below the same predefined threshold or below another predefined threshold).

Still furthermore, it is preferred according to the present invention that the IP addresses allocated by the IP address manager to the plurality of access nodes comprise fixed blocks of IP addresses and dynamic blocks of IP addresses, wherein at least one of the fixed blocks of IP addresses is allocated to the one access node of the plurality of access nodes.

Thereby, it is advantageously possible that a certain number of IP addresses (corresponding to the number of IP addresses comprised in the fixed blocks of IP addresses) are allocated anyway to a concerned access node.

Furthermore, it is preferred according to the present invention that - among the IP addresses that are allocated to the one access node of the plurality of access nodes -
-- one IP address of a dynamic block of IP addresses or the fixed block of IP addresses, or
-- a sub-block of IP addresses of a dynamic block of IP addresses or the fixed block of IP addresses, or
-- one of a plurality of dynamic blocks of IP addresses or of fixed blocks of IP addresses is de-allocated from the access node upon reception, by the access node from the IP address manager, of a de-allocation request and/or of a IP addresses usage inquiry.

Thereby, it is advantageously possible that the IP address manager is also able to request that IP addresses be rendered to the IP address manager in case that such IP addresses are allocated to a concerned access node but are unused by a customer premise equipment (or other subscriber to the telecommunications network).

According to the present invention
-- upon reception of a new IP address request at the one access node of the plurality of access nodes, from a customer premise equipment at least indirectly connected to the access node, and
-- in case of at least one available IP address in a plurality of blocks of IP addresses allocated to the access node,
an available IP address in a fixed block of IP addresses is prioritized to be used for the new IP address request over an available IP address in dynamic block of IP addresses, and an available IP address in a more completely used dynamic block of IP addresses is prioritized to be used for the new IP address request over an available IP address in a less completely used dynamic block of IP addresses.

Thereby, it is advantageously possible that dynamic blocks of IP addresses and/or additional dynamic blocks of IP addresses are held available to be de-allocated by an access node and to be possibly released towards the IP address manager if such a need exists.

Characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a conventional telecommunications network comprising a plurality of access nodes, wherein the telecommunications network comprises a backbone, an IP address manager, and a customer premise equipment being connected to the telecommunications network.
Figure 2 schematically illustrates a telecommunications network according to the present invention, comprising an access node, a backbone, and an IP address manager, and where also a customer premise equipment is connected to the telecommunications network.
Figure 3 schematically illustrates the dynamic nature of IP address allocation to an access node within the telecommunications network.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

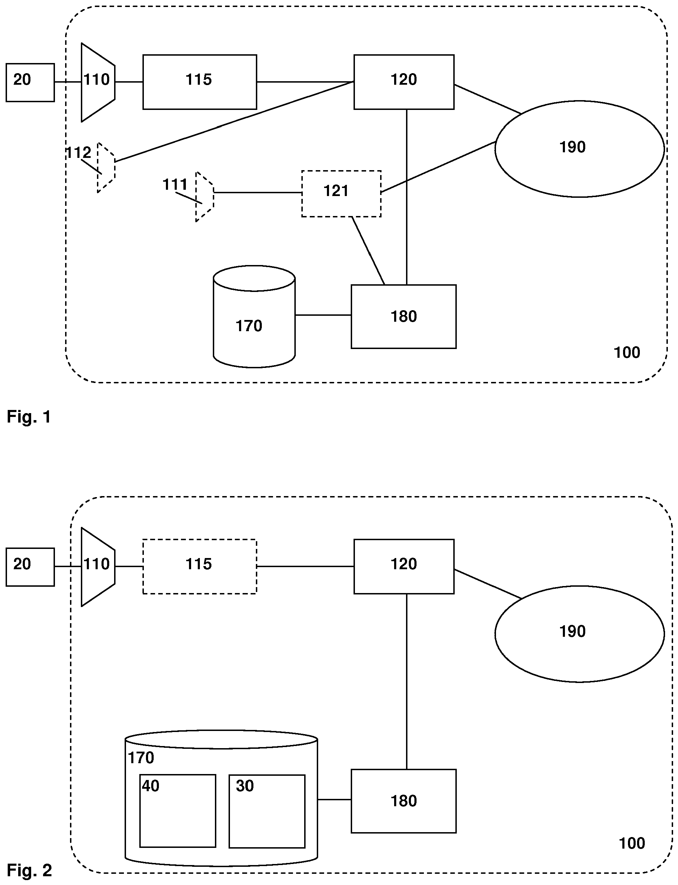

In Figure 1, a conventional telecommunications network 100 is schematically shown, wherein the telecommunications network 100 comprises a plurality of access nodes 120, 121, 110, 111, 112, wherein the telecommunications network 100 comprises a backbone 190, an IP address manager 180, and a customer premise equipment 20 being exemplarily connected to the telecommunications network 100.

In Figure 2, likewise illustrates a telecommunications network 100 comprising an access node 120 (being representative for a number or a plurality of different access nodes not shown), wherein the telecommunications network 100 likewise comprises a backbone 190, an IP address manager 180, and a customer premise equipment 20 being exemplarily connected to the telecommunications network 100 (by means of an access node 110 which is meant to be an access node of another layer than the access node 120).

The access nodes of the inventive telecommunications network 100 are typically organized in different layers, such as so-called layer 2 access nodes or layer 3 access nodes. It is important that - according to the present invention, it is understood that the one (considered) access node 120 and the plurality of access nodes belong to the same layer of access nodes in the access network of the telecommunications network 100. In the following, the invention is mainly described with respect to L3 access nodes having allocated IP addresses; however a corresponding allocation and/or de-allocation can also be realized with another layer of access nodes.

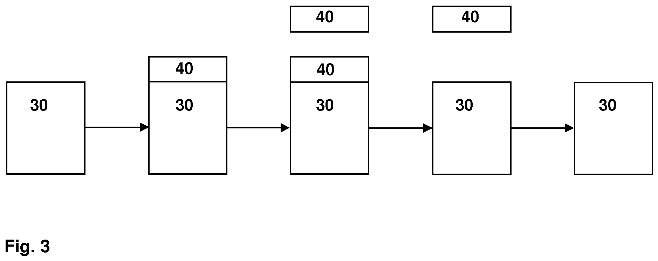

The needs of allocated IP addresses at a specific or concerned access node 120 typically varies in time, i.e. the number of IP addresses, required by one access node 120 of the plurality of access nodes (of the same layer of access nodes), varies in time, and as a result, IP addresses are allocated to and de-allocated from the one access node 120 by the IP address manager 180 dependent on the variation in time of the IP addresses requested by the access node 120 (which is triggered by the request of IP addresses by the customer premise equipments connected to the subnet of the telecommunications network 100 served by the concerned access node 120). Figure 3 schematically illustrates the dynamic nature of IP address allocation to an access node (such as access node 120) within the telecommunications network 100: The IP addresses are organized in blocks of IP addresses. The allocated IP addresses either belong to so-called fixed blocks 30 of IP addresses, or to so-called dynamic blocks 40 of IP addresses. The different representations (in total five different representations from left to right in Figure 3 represent the different number of allocated IP addresses at different points in time.

Typically, user devices or customer premise equipments 20 are connected to the telecommunications network 100 by means of Layer 2 Access Nodes (represented by reference signs 110, 111, 112 in Figure 1 and by reference sign 110 in Figure 2) which are connected to Layer 3 Access Nodes (represented by references signs 120 and 121 in Figure 1 and by reference sign 120 in Figure 2) via some intermediate infrastructure, represented by reference sign 115 both in Figures 1 and 2. The type and the used technology for links between user device and L2 access nodes and between access nodes depends on the implementation of the telecommunications network 100, and especially on the implementation of the access network of the telecommunications network 100. The L3 Access Node 120 provide IP addresses for connected users, i.e. customer premise equipment 20. The assignment of an IP address to the user (or the customer premise equipment 20) depends on the implementation of the access network (e.g. DHCP, PPP, etc.). Thereby the L3 Access Node either integrates IP address manager functionality (for all other L3 access nodes) for controlling available IP addresses or contacts a central IP address manager 180 managing the whole IP address pool available for all L3 Access Nodes (of the telecommunications network 100). In the IP Address Pool available via the IP address manager 180, different address blocks are reserved for the usage on every L3 access node 120. One IP address block is available on the L3 Access Node 120 with integrated IP Address Manager. The L3 Access Nodes are connected to the IP backbone 190 to receive IP packets from other public IP addresses. L3 Access Node 120 also propagates the IP addresses configurable on the node into the backbone 190 by using routing protocols (e.g. BGP, Border Gateway Protocol) to get incoming packets. The routing of incoming packets is performed in this way.

In general, IP addresses for customers are not sufficient due to inefficient distribution of IP address pools among Layer-3 (L3) access nodes. This is valid as long as the number of customers in the operator's network is lower than number of available IP addresses. In case there are more customers in the whole operator's network, the problem of a lack of IP addresses will still exist. Considering the conventional access network (or telecommunications network 100) shown in Figure 1, every block (or address block) of IP addresses in the pool of IP addresses must have sufficient IP addresses to serve all subscribers connected to the appropriate L3 Access Node. In carrier-grade access networks with thousands of L3 Access Nodes, the prediction of the exact number of customers going to connect to every L3 Access Node is a difficult and expensive task. In many cases, every IP address block, i.e. every L3 access node gets the same amount of addresses for allocation to users. Every address block thereby has some reserves (i.e. is allocated but not completely used) so that IP addresses are lacked either for further extension of the access network with new L3 access nodes or if the allocated IP addresses for an L3 access node 120 becomes insufficient to serve all connected users.

According to the present invention, the address pool of the telecommunications network 100 should be organized in blocks of IP addresses. Furthermore, it should be separated into so-called fixed blocks of IP addresses and so-called dynamic blocks of IP addresses. Fixed address blocks (are assigned to L3 Access Nodes as in today's networks as described above. Additionally to fixed address blocks a L3 Access Node may request further dynamic address blocks in the case the fixed address block is not sufficient. L3 Access Node requests for a dynamic address block if, e.g., 90% of its available addresses (in fixed and dynamic address blocks) are occupied. Dynamic address blocks are controlled by the IP Address Manager 180. Either one central IP Address Manager 180 or multiple IP Address Managers may be implemented in the telecommunications network 100. By using multiple IP Address Managers every of them either uses separate IP Address Blocks or master-slave relations between IP Address Managers can be established. Users connected to the L3 Access Node 120 after reception of new dynamic address block may then get IP address from the new address block received by the L3 Access Node on request. The concerned L3 Access Node 120 may request and get multiple dynamic address blocks. Different strategies for allocation of IP addresses for users can be applied in case that the L3 Access Node 120 has at least one dynamic address block. Since the L3 Access Node 120 has then at least two blocks wherefrom users may get IP addresses, the access node 120 has to decide from which block an IP address to the new user is to be assigned. According to the present invention, it is proposed to assign IP addresses for new users always from the fixed block 30 if there are still available addresses. This decision ensures that the fixed address block 30 contains the most used IP addresses among address ranges available on L3 access nodes. If the L3 Access Node 120 has multiple dynamic address blocks 40 and there is no more free IP address in the fixed address block 30, it is proposed to use an available IP address from the most loaded (or most complete) dynamic address block to be assigned to the new user. This is done in order to use as few dynamic address blocks as possible or to keep as many as possible dynamic address blocks completely unoccupied. Consequently, as less dynamic address blocks are occupied on the L3 Access Node 120 as possible. By using the proposed method, dynamic address blocks will become free faster. If a dynamic address block becomes free again (i.e. the last occupied IP address in the dynamic block is released), the L3 Access Node 120 also releases the dynamic address block by informing L3 Address Manager, and the address block can be returned to the IP address manager 180.

It is proposed to implement additional checks for the release step, e.g. check whether remaining IP addresses in other blocks assigned to an access node are occupied less than 90%, or release of the block only after a defined timeout. Further checks can also be configured on the IP Address Manager 180 in order to avoid to assign (or allocate) released address blocks to further requesting L3 access nodes within a quarantine time in order to avoid frequent re-allocations of a dynamic address block between different L3 Access Nodes. To avoid further ping-pong effects (e.g. request and release of an address block within a very short time) there are well-known techniques to apply.

After the reception of the dynamic address block for the usage, the L3 Access Node 120 also propagates the new dynamic address block into the Backbone 190 additionally to already configured addresses. This ensures incoming Internet Protocol packets to IP addresses from the new block are delivered to the correct L3 Access Node 120.

For managing of the allocation of dynamic address blocks to different L3 access nodes, the IP Address Manager 180 especially has a table. By using such a table IP Address Manager has control over the dynamic address blocks.

During initialisation of the L3 Access Node 120 only a fixed address block 30 is configured. When addresses of this block are occupied, the access node 120 requests a further dynamic address block 40 and gets from the IP Address Manager 180 a dynamic Address Block. The Access node 120 propagates this dynamic address block into the backbone 190 and may assign for further user devices (requesting an IP address) with IP addresses from the new block. If IP addresses in the fixed Address Block and in the dynamic Address Block are not sufficient to serve users (e.g. an occupation level of over 90% is reached), further dynamic Address Blocks are requested by the L3 access node 120 and a further dynamic Address Block is assigned to the access node 120. Available address blocks on the L3 Access Node 120 are extended by these steps. If the usage of IP addresses reduces and some dynamic address blocks gets free (i.e. completely unoccupied), they are released by the L3 Access Node 120 at the IP Address Manager 180. Finally, only the Fixed Address Block 40 only remains allocated to the L3 Access Node.

The size of fixed and dynamic address blocks may be different. In this case the L3 Access Nodes get any IP addresses for assignment to users only when first user tries to establish IP connectivity.

According to the present invention, dynamic address blocks of different sizes are proposed. During the request, the L3 Access Node 120 transfers additional information, especially the increasing rate of IP address usage. Depending on this additional information the IP Address Manager assigns to the requesting access node 120 either smaller or larger dynamic address blocks.

The most efficient address usage (without any wasting due to unused addresses in allocated address blocks) is implemented if the size of fixed address block is reduced and the size of dynamical address block is comparably low. This tends to a situation where all IP addresses are concentrated in one IP Address Pool and the efficiency of the address assignment from the pool approaches 100%. However, a too strong reduction in size of address blocks means that more overhead is needed to propagate such information in the backbone 190 via a routing protocol (to get the incoming packet on the correct L3 access node), thus a compromise should be implemented.

## Claims

1. Method for an enhanced management of Internet Protocol, IP, addresses in a telecommunications network (100), the telecommunications network (100) comprising a backbone (190), and a plurality of access nodes in order to provide IP connectivity to a plurality of customer premise equipments (20) connected to the telecommunications network (100) via the access nodes, wherein the IP addresses are provided to the access nodes by an IP address manager (180), wherein the number of IP addresses, required by one access node (120) of the plurality of access nodes, varies in time, wherein, as a result, IP addresses are allocated to and de-allocated from the one access node (120) of the plurality of access nodes by the IP address manager (180) dependent on the variation in time of the IP addresses requested by the access node (120), wherein the method comprises the following steps:
-- in a first step, the one access node (120) of the plurality of access nodes, or the IP address manager (180) detects that additional IP addresses are required or will be required for the customer premise equipments (20) connected or possibly going to be connected to the telecommunications network (100) via the access node (120),
-- in a second step, the one access node (120) of the plurality of access nodes sends an IP addresses allocation request to the IP address manager (180) for allocation of additional IP addresses, the IP addresses allocation request including an indication related to the increase per time interval of required IP addresses at the access node (120), wherein the indication is related to the speed of increase of required IP addresses at the one access node (120) of the plurality of access nodes, or the IP address manager (180) detects the increase per time interval of required IP addresses at the access node (120), wherein the IP address manager (180) detects the speed of increase of required IP addresses at the access node (120),
-- in a third step, IP addresses are allocated to the one access node (120) of the plurality of access nodes by the IP address manager (180) dependent on the IP addresses allocation request, wherein, depending on
-- either the IP addresses allocation request, and depending on the indication related to the speed of increase of required IP addresses at the one access node (120) of the plurality of access nodes, or
-- the IP address manager (180) detecting the speed of increase of required IP addresses at the access node (120),
IP addresses are additionally allocated to the access node (120) by the IP address manager (180), the additionally allocated IP addresses comprising:
-- a variable number of blocks of IP addresses or
-- a block of IP addresses comprising a variable number of IP addresses,
wherein
-- upon reception of a new IP address request at the one access node (120) of the plurality of access nodes, from a customer premise equipment (20) at least indirectly connected to the access node (12), and
-- in case of at least one available IP address in a plurality of blocks of IP addresses allocated to the access node (120),
an available IP address in a fixed block of IP addresses is prioritized to be used for the new IP address request over an available IP address in dynamic block of IP addresses, and an available IP address in a more completely used dynamic block of IP addresses is prioritized to be used for the new IP address request over an available IP address in a less completely used dynamic block of IP addresses.

2. Method according to claim 1, wherein the IP addresses allocation request is sent to the IP address manager (180) in case that an increase of required IP addresses is detected by the one access node (120) of the plurality of access nodes, above a predetermined threshold of an IP address usage level by the access node (120).

3. Method according to one of the preceding claims, wherein the IP addresses allocated by the IP address manager (180) to the plurality of access nodes are organized in blocks of IP addresses, each block of IP addresses comprising one IP address or a plurality of IP addresses, wherein the blocks preferably comprise a number of IP addresses corresponding to a power of 2.

4. Method according to one of the preceding claims, wherein different blocks of IP addresses comprise different numbers of IP addresses such that blocks of IP addresses with at least two different numbers of IP addresses exist.

5. Method according to one of the preceding claims, wherein the IP addresses allocated by the IP address manager (180) to the plurality of access nodes comprise fixed blocks (30) of IP addresses and dynamic blocks (40) of IP addresses, wherein at least one of the fixed blocks (30) of IP addresses is allocated to the one access node (120) of the plurality of access nodes.

6. Method according to one of the preceding claims, wherein - among the IP addresses that are allocated to the one access node (120) of the plurality of access nodes -
-- one IP address of a dynamic block of IP addresses or the fixed block of IP addresses, or
-- a sub-block of IP addresses of a dynamic block of IP addresses or the fixed block of IP addresses, or
-- one of a plurality of dynamic blocks of IP addresses or of fixed blocks of IP addresses
is de-allocated from the access node (120) upon reception, by the access node (120) from the IP address manager (180), of a de-allocation request and/or of a IP addresses usage inquiry.

7. Telecommunications network (100) for an enhanced management of Internet Protocol, IP, addresses, the telecommunications network (100) comprising a backbone (190), and a plurality of access nodes in order to provide IP connectivity to a plurality of customer premise equipments (20) connected to the telecommunications network (100) via the access nodes, wherein the IP addresses are provided to the access nodes by an IP address manager (180), wherein the number of IP addresses, required by one access node (120) of the plurality of access nodes, varies in time, wherein, as a result, IP addresses are allocated to and de-allocated from the one access node (120) of the plurality of access nodes by the IP address manager (180) dependent on the variation in time of the IP addresses requested by the access node (120), wherein the telecommunications network (100) is configured such that:
-- the one access node (120) of the plurality of access nodes, or the IP address manager (180) detects that additional IP addresses are required or will be required for the customer premise equipments (20) connected or possibly going to be connected to the telecommunications network (100) via the access node (120),
-- the one access node (120) of the plurality of access nodes sends an IP addresses allocation request to the IP address manager (180) for allocation of additional IP addresses, the IP addresses allocation request including an indication related to the increase per time interval of required IP addresses at the access node (120), wherein the indication is related to the speed of increase of required IP addresses at the one access node (120) of the plurality of access nodes, or the IP address manager (180) detects the increase per time interval of required IP addresses at the access node (120), wherein the IP address manager (180) detects the speed of increase of required IP addresses at the access node (120),
-- in a third step, IP addresses are allocated to the one access node (120) of the plurality of access nodes by the IP address manager (180) dependent on the IP addresses allocation request, wherein, depending on
-- either the IP addresses allocation request, and depending on the indication related to the speed of increase of required IP addresses at the one access node (120) of the plurality of access nodes, or
-- the IP address manager (180) detecting the speed of increase of required IP addresses at the access node (120),
IP addresses are additionally allocated to the access node (120) by the IP address manager (180), the additionally allocated IP addresses comprising:
-- a variable number of blocks of IP addresses or
-- a block of IP addresses comprising a variable number of IP addresses,
wherein
-- upon reception of a new IP address request at the one access node (120) of the plurality of access nodes, from a customer premise equipment (20) at least indirectly connected to the access node (12), and
-- in case of at least one available IP address in a plurality of blocks of IP addresses allocated to the access node (120),
an available IP address in a fixed block of IP addresses is prioritized to be used for the new IP address request over an available IP address in dynamic block of IP addresses, and an available IP address in a more completely used dynamic block of IP addresses is prioritized to be used for the new IP address request over an available IP address in a less completely used dynamic block of IP addresses.

8. Program comprising a computer readable program code which, when executed on a computer and/or on an access node (120) of a telecommunications network (100) and/or on an IP address manager (180) of the telecommunications network (100), especially in part on an access node (120) and in part on an IP address manager (180), causes the computer and/or the access node (120) of the telecommunications network (100) and/or the IP address manager (180) to perform a method according to one of claims 1 to 6.

9. Computer program product for using a telecommunications network (100), the computer program product comprising a computer program stored on a storage medium, the computer program comprising program code which, when executed on a computer and/or on an access node (120) of a telecommunications network (100) and/or on an IP address manager (180) of the telecommunications network (100), especially in part on an access node (120) and in part on an IP address manager (180), causes the computer and/or the access node (120) of the telecommunications network (100) and/or the IP address manager (180) to perform a method according to one of claims 1 to 6.

## Patentansprüche

1. Verfahren für ein verbessertes Management von Internet Protocol (IP)-Adressen in einem Telekommunikationsnetz (100), wobei das Telekommunikationsnetz (100) ein Backbone (190) und mehrere Zugangs knoten umfasst, um IP-Konnektivität für mehrere Kundenstandortausrüstungen (Customer Premise Equipments) (20) bereitzustellen, die mit dem Telekommunikationsnetz (100) über die Zugangsknoten verbunden sind, wobei die IP-Adressen an die Zugangsknoten durch einen IP-Adressenmanager (180) übermittelt werden, wobei die Anzahl von IP-Adressen, die durch einen Zugangsknoten (120) unter den mehreren Zugangsknoten benötigt werden, zeitlich variiert, wobei, infolge dessen, dem einen Zugangsknoten (120) unter den mehreren Zugangs knoten durch den IP-Adressenmanager (180) in Abhängigkeit von der zeitlichen Variation der durch den Zugangsknoten (120) angeforderten IP-Adressen IP-Adressen zugewiesen werden bzw. ihre Zuweisung aufgehoben wird, wobei das Verfahren die folgenden Schritte umfasst:
- in einem ersten Schritt detektiert der eine Zugangsknoten (120) unter den mehreren Zugangsknoten oder der IP-Adressenmanager (180), dass für die Kundenstandortausrüstungen (20), die mit dem Telekommunikationsnetz (100) über den Zugangsknoten (120) verbunden sind oder möglicherweise verbunden sein werden, zusätzliche IP-Adressen erforderlich sind oder erforderlich sein werden,
- in einem zweiten Schritt sendet der eine Zugangsknoten (120) unter den mehreren Zugangsknoten an den IP-Adressenmanager (180) eine IP-Adressen-Zuordnungsanforderung für die Zuweisung zusätzlicher IP-Adressen, wobei die IP-Adressen-Zuordnungsanforderung einen Hinweis auf die Zunahme erforderlicher IP-Adressen pro Zeitintervall in dem Zugangsknoten (120) enthält, wobei sich der Hinweis auf die Geschwindigkeit der Zunahme erforderlicher IP-Adressen in dem einen Zugangsknoten (120) unter den mehreren Zugangs knoten bezieht, oder der IP-Adressenmanager (180) die Zunahme erforderlicher IP-Adressen pro Zeitintervall in dem Zugangsknoten (120) detektiert, wobei der IP-Adressenmanager (180) die Geschwindigkeit der Zunahme erforderlicher IP-Adressen in dem Zugangsknoten (120) detektiert,
- in einem dritten Schritt werden dem einen Zugangsknoten (120) unter den mehreren Zugangsknoten durch den IP-Adressenmanager (180) in Abhängigkeit von der IP-Adressen-Zuordnungsanforderung IP-Adressen zugewiesen, wobei in Abhängigkeit
- entweder von der IP-Adressen-Zuordnungsanforderung, und in Abhängigkeit von dem Hinweis auf die Geschwindigkeit der Zunahme erforderlicher IP-Adressen in dem einen Zugangs knoten (120) unter den mehreren Zugangsknoten, oder
- davon, dass der IP-Adressenmanager (180) die Geschwindigkeit der Zunahme erforderlicher IP-Adressen in dem Zugangsknoten (120) detektiert,
dem Zugangsknoten (120) durch den IP-Adressenmanager (180) IP-Adressen zusätzlich zugewiesen werden, wobei die zusätzlich zugewiesen IP-Adressen Folgendes umfassen:
- eine variable Anzahl von Blöcken von IP-Adressen oder
- einen Block von IP-Adressen, der eine variable Anzahl von IP-Adressen umfasst,
wobei
- bei Empfang einer neuen IP-Adressenanforderung in dem einen Zugangsknoten (120) unter den mehreren Zugangsknoten von einer Kundenstandortausrüstung (20), die mindestens indirekt mit dem Zugangsknoten (**120**) verbunden ist, und
- im Fall mindestens einer verfügbaren IP-Adresse in mehreren Blöcken von IP-Adressen, die dem Zugangs knoten (120) zugewiesen sind,
eine verfügbare IP-Adresse in einem festen Block von IP-Adressen gegenüber einer verfügbaren IP-Adresse in einem dynamischen Block von IP-Adressen priorisiert wird, um für die neue IP-Adressenanforderung verwendet zu werden, und eine verfügbare IP-Adresse in einem vollständiger verwendeten dynamischen Block von IP-Adressen wird gegenüber einer verfügbaren IP-Adresse in einem weniger vollständig verwendeten dynamischen Block von IP-Adressen priorisiert, um für die neue IP-Adressenanforderung verwendet zu werden.

2. Verfahren nach Anspruch 1, wobei die IP-Adressen-Zuordnungsanforderung an den IP-Adressenmanager (180) gesendet wird, falls durch den einen Zugangsknoten (120) unter den mehreren Zugangs knoten eine Zunahme erforderlicher IP-Adressen über eine zuvor festgelegte Schwelle eines IP-Adressen-Nutzungsniveaus seitens des Zugangsknotens (120) hinaus detektiert wird.

3. Verfahren nach einem der vorangehenden Ansprüche, wobei die IP-Adressen, die den mehreren Zugangsknoten durch den IP-Adressenmanager (180) zugewiesen werden, in Blöcken von IP-Adressen organisiert werden, wobei jeder Block von IP-Adressen eine einzelne IP-Adresse oder mehrere IP-Adressen umfasst, wobei die Blöcke bevorzugt eine Anzahl von IP-Adressen umfassen, die einer zweiten Potenz entsprechen.

4. Verfahren nach einem der vorangehenden Ansprüche, wobei verschiedene Blöcke von IP-Adressen verschiedene Anzahlen von IP-Adressen umfassen, dergestalt, dass Blöcke von IP-Adressen mit mindestens zwei verschiedenen Anzahlen von IP-Adressen existieren.

5. Verfahren nach einem der vorangehenden Ansprüche, wobei die IP-Adressen, die den mehreren Zugangsknoten durch den IP-Adressenmanager (180) zugewiesen werden, feste Blöcke (30) von IP-Adressen und dynamische Blöcke (40) von IP-Adressen umfassen, wobei mindestens einer der festen Blöcke (30) von IP-Adressen dem einen Zugangsknoten (120) unter den mehreren Zugangsknoten zugewiesen wird.

6. Verfahren nach einem der vorangehenden Ansprüche, wobei - unter den IP-Adressen, die dem einen Zugangsknoten (120) unter den mehreren Zugangsknoten zugewiesen werden -
- eine einzelne IP-Adresse eines dynamischen Blocks von IP-Adressen oder des festen Blocks von IP-Adressen, oder
- ein Subblock von IP-Adressen eines dynamischen Blocks von IP-Adressen oder des festen Blocks IP-Adressen, oder
- einer von mehreren dynamischen Blöcken von IP-Adressen oder von festen Blöcken von IP-Adressen
aus ihrer bzw. seiner Zuweisung zu dem Zugangsknoten (120) gelöst wird, wenn der Zugangsknoten (120) von dem IP-Adressenmanager (180) eine Zuweisungsaufhebungsanforderung und/oder eine IP-Adressen-Nutzungsanfrage empfängt.

7. Telekommunikationsnetz (100) für ein verbessertes Management von Internet Protocol-Adressen, wobei das Telekommunikationsnetz (100) ein Backbone (190) und mehrere Zugangs knoten umfasst, um IP-Konnektivität für mehrere Kundenstandortausrüstungen (Customer Premise Equipments) (20) bereitzustellen, die mit dem Telekommunikationsnetz (100) über die Zugangsknoten verbunden sind, wobei die IP-Adressen an die Zugangsknoten durch einen IP-Adressenmanager (180) übermittelt werden, wobei die Anzahl von IP-Adressen, die durch einen Zugangsknoten (120) unter den mehreren Zugangs knoten benötigt werden, zeitlich variiert, wobei, infolge dessen, dem einen Zugangsknoten (120) unter den mehreren Zugangsknoten durch den IP-Adressenmanager (180) in Abhängigkeit von der zeitlichen Variation der durch den Zugangs knoten (120) angeforderten IP-Adressen IP-Adressen zugewiesen werden bzw. ihre Zuweisung aufgehoben wird, wobei das Telekommunikationsnetz (100) so konfiguriert ist, dass:
- der eine Zugangsknoten (120) unter den mehreren Zugangs knoten oder der IP-Adressenmanager (180) detektiert, dass für die Kundenstandortausrüstungen (20), die mit dem Telekommunikationsnetz (100) über den Zugangsknoten (120) verbunden sind oder möglicherweise verbunden sein werden, zusätzliche IP-Adressen erforderlich sind oder erforderlich sein werden,
- der eine Zugangsknoten (120) unter den mehreren Zugangs knoten an den IP-Adressenmanager (180) eine IP-Adressen-Zuordnungsanforderung für die Zuweisung zusätzlicher IP-Adressen sendet, wobei die IP-Adressen-Zuordnungsanforderung einen Hinweis auf die Zunahme erforderlicher IP-Adressen pro Zeitintervall in dem Zugangsknoten (120) enthält, wobei sich der Hinweis auf die Geschwindigkeit der Zunahme erforderlicher IP-Adressen in dem einen Zugangsknoten (120) unter den mehreren Zugangsknoten bezieht, oder der IP-Adressenmanager (180) die Zunahme erforderlicher IP-Adressen pro Zeitintervall in dem Zugangsknoten (120) detektiert, wobei der IP-Adressenmanager (180) die Geschwindigkeit der Zunahme erforderlicher IP-Adressen in dem Zugangsknoten (120) detektiert,
- in einem dritten Schritt dem einen Zugangs knoten (120) unter den mehreren Zugangsknoten durch den IP-Adressenmanager (180) in Abhängigkeit von der IP-Adressen-Zuordnungsanforderung IP-Adressen zugewiesen werden, wobei in Abhängigkeit
- entweder von der IP-Adressen-Zuordnungsanforderung, und in Abhängigkeit von dem Hinweis auf die Geschwindigkeit der Zunahme erforderlicher IP-Adressen in dem einen Zugangs knoten (120) unter den mehreren Zugangsknoten, oder
- davon, dass der IP-Adressenmanager (180) die Geschwindigkeit der Zunahme erforderlicher IP-Adressen in dem Zugangsknoten (120) detektiert,
dem Zugangsknoten (120) durch den IP-Adressenmanager (180) IP-Adressen zusätzlich zugewiesen werden, wobei die zusätzlich zugewiesen IP-Adressen Folgendes umfassen:
- eine variable Anzahl von Blöcken von IP-Adressen oder
- einen Block von IP-Adressen, der eine variable Anzahl von IP-Adressen umfasst,
wobei
- bei Empfang einer neuen IP-Adressenanforderung in dem einen Zugangsknoten (120) unter den mehreren Zugangs knoten von einer Kundenstandortausrüstung (20), die mindestens indirekt mit dem Zugangsknoten (**120**) verbunden ist, und
- im Fall mindestens einer verfügbaren IP-Adresse in mehreren Blöcken von IP-Adressen, die dem Zugangs knoten (120) zugewiesen sind,
eine verfügbare IP-Adresse in einem festen Block von IP-Adressen gegenüber einer verfügbaren IP-Adresse in einem dynamischen Block von IP-Adressen priorisiert wird, um für die neue IP-Adressenanforderung verwendet zu werden, und eine verfügbare IP-Adresse in einem vollständiger verwendeten dynamischen Block von IP-Adressen gegenüber einer verfügbaren IP-Adresse in einem weniger vollständig verwendeten dynamischen Block von IP-Adressen priorisiert wird, um für die neue IP-Adressenanforderung verwendet zu werden.

8. Programm, das einen computerlesbaren Programmcode umfasst, der, wenn er auf einem Computer und/oder in einem Zugangsknoten (120) eines Telekommunikationsnetzes (100) und/oder in einem IP-Adressenmanager (180) des Telekommunikationsnetzes (100), insbesondere zum Teil in einem Zugangsknoten (120) und zum Teil in einem IP-Adressenmanager (180), ausgeführt wird, den Computer und/oder den Zugangsknoten (120) des Telekommunikationsnetzes (100) und/oder den IP-Adressenmanager (180) veranlasst, ein Verfahren nach einem der Ansprüche 1 bis 6 auszuführen.

9. Computerprogrammprodukt zur Verwendung eines Telekommunikationsnetzes (100), wobei das Computerprogrammprodukt ein Computerprogramm umfasst, das auf einem Speichermedium gespeichert, wobei das Computerprogramm Programmcode umfasst, der, wenn er auf einem Computer und/oder in einem Zugangsknoten (120) eines Telekommunikationsnetzes (100) und/oder in einem IP-Adressenmanager (180) des Telekommunikationsnetzes (100), insbesondere zum Teil in einem Zugangsknoten (120) und zum Teil in einem IP-Adressenmanager (180), ausgeführt wird, den Computer und/oder den Zugangsknoten (120) des Telekommunikationsnetzes (100) und/oder den IP-Adressenmanager (180) veranlasst, ein Verfahren nach einem der Ansprüche 1 bis 6 auszuführen.

## Revendications

1. Procédé de gestion améliorée d'adresses selon le protocole Internet, IP (*Internet Protocol*), dans un réseau de télécommunications (100), le réseau de télécommunications (100) comprenant un réseau central (190) et une pluralité de noeuds d'accès afin d'assurer une connectivité IP à une pluralité d'équipements de locaux clients (20) connectés au réseau de télécommunications (100) par le biais des noeuds d'accès, dans lequel les adresses IP sont fournies aux noeuds d'accès par un gestionnaire d'adresses IP (180), dans lequel le nombre d'adresses IP requis par un noeud d'accès (120) de la pluralité de noeuds d'accès varie dans le temps, dans lequel, de ce fait, des adresses IP sont affectées au noeud d'accès (120) de la pluralité de noeuds d'accès et désaffectées de celui-ci, par le gestionnaire d'adresses IP (180) en fonction de la variation dans le temps des adresses IP demandées par le noeud d'accès (120), dans lequel le procédé comprend les étapes suivantes :
- lors d'une première étape, le noeud d'accès (120) de la pluralité de noeuds d'accès, ou le gestionnaire d'adresses IP (180) détecte que des adresses IP supplémentaires sont requises ou seront requises pour les équipements de locaux clients (20) connectés ou allant probablement être connectés au réseau de télécommunications (100) par le biais du noeud d'accès (120),
- lors d'une deuxième étape, le noeud d'accès (120) de la pluralité de noeuds d'accès envoie une demande d'affectation d'adresses IP au gestionnaire d'adresses IP (180) aux fins de l'affectation d'adresses IP supplémentaires, la demande d'affectation d'adresses IP comportant une indication se rapportant à l'augmentation par intervalle de temps des adresses IP requises au niveau du noeud d'accès (120), dans lequel l'indication se rapporte à la vitesse d'augmentation des adresses IP requises au niveau du noeud d'accès (120) de la pluralité de noeuds d'accès, ou le gestionnaire d'adresses IP (180) détecte l'augmentation par intervalle de temps des adresses IP requises au niveau du noeud d'accès (120), dans lequel le gestionnaire d'adresses IP (180) détecte la vitesse d'augmentation des adresses IP requises au niveau du noeud d'accès (120),
- lors d'une troisième étape, les adresses IP sont affectées au noeud d'accès (120) de la pluralité de noeuds d'accès par le gestionnaire d'adresses IP (180), en fonction de la demande d'affectation d'adresses IP,
dans lequel, en fonction de :
- soit la demande d'affectation d'adresses IP et l'indication se rapportant à la vitesse d'augmentation des adresses IP requises au niveau du noeud d'accès (120) de la pluralité de noeuds d'accès,
- soit la détection par le gestionnaire d'adresses IP (180) de la vitesse d'augmentation des adresses IP requises au niveau du noeud d'accès (120),
des adresses IP sont affectées en plus au noeud d'accès (120) par le gestionnaire d'adresses IP (180), les adresses IP affectées en plus comprenant :
- un nombre variable de blocs d'adresses IP ou
- un bloc d'adresses IP comprenant un nombre variable d'adresses IP,
dans lequel :
- à la réception d'une nouvelle demande d'adresses IP, au niveau du noeud d'accès (120) de la pluralité de noeuds d'accès, en provenance d'un équipement de locaux client (20) au moins connecté indirectement au noeud d'accès (**120**) et
- dans le cas d'au moins une adresse IP disponible dans une pluralité de blocs d'adresses IP affectées au noeud d'accès (120),
la priorité est accordée à une adresse IP disponible dans un bloc fixe d'adresses IP, afin qu'elle soit utilisée pour la nouvelle demande d'adresses IP, plutôt qu'une adresse IP disponible dans un bloc dynamique d'adresses IP, et la priorité est accordée à une adresse IP disponible dans un bloc dynamique d'adresses IP plus complètement utilisé, afin qu'elle soit utilisée pour la nouvelle demande d'adresses IP, plutôt qu'une adresse IP disponible dans un bloc dynamique d'adresses IP moins complètement utilisé.

2. Procédé selon la revendication 1, dans lequel la demande d'affectation d'adresses IP est envoyée au gestionnaire d'adresses IP (180), dans le cas où une augmentation des adresses IP requises est détectée par le noeud d'accès (120) de la pluralité de noeuds d'accès, au-delà d'un seuil prédéterminé de niveau d'utilisation d'adresses IP par le noeud d'accès (120).

3. Procédé selon l'une des revendications précédentes, dans lequel les adresses IP affectées par le gestionnaire d'adresses IP (180) à la pluralité de noeuds d'accès sont organisées en blocs d'adresses IP, chaque bloc d'adresses IP comprenant une adresse IP ou une pluralité d'adresses IP, dans lequel les blocs comprennent de préférence un nombre d'adresses IP correspondant à une puissance de 2.

4. Procédé selon l'une des revendications précédentes, dans lequel différents blocs d'adresses IP comprennent différents nombres d'adresses IP, de manière qu'il existe des blocs d'adresses IP ayant au moins deux nombres différents d'adresses IP.

5. Procédé selon l'une des revendications précédentes, dans lequel les adresses IP affectées par le gestionnaire d'adresses IP (180) à la pluralité de noeuds d'accès comprennent des blocs fixes (30) d'adresses IP et des blocs dynamiques (40) d'adresses IP, dans lequel au moins l'un des blocs fixes (30) d'adresses IP est affecté au noeud d'accès (120) de la pluralité de noeuds d'accès.

6. Procédé selon l'une des revendications précédentes, dans lequel - parmi les adresses IP qui sont affectées au noeud d'accès (120) de la pluralité de noeuds d'accès - :
- une adresse IP de bloc dynamique d'adresses IP ou du bloc fixe d'adresses IP, ou
- un sous-bloc d'adresses IP de bloc dynamique d'adresses IP ou du bloc fixe d'adresses IP, ou
- un bloc de la pluralité de blocs dynamiques d'adresses IP ou de blocs fixes d'adresses IP
est désaffecté(e) du noeud d'accès (120) à la réception, par le noeud d'accès (120), en provenance du gestionnaire d'adresses IP (180), d'une demande de désaffectation et/ou d'une interrogation sur l'utilisation d'adresses IP.

7. Réseau de télécommunications (100) permettant une gestion améliorée d'adresses selon le protocole Internet, IP, le réseau de télécommunications (100) comprenant un réseau central (190), et une pluralité de noeuds d'accès afin assurer une connectivité IP à une pluralité d'équipements de locaux clients (20) connectés au réseau de télécommunications (100) par le biais des noeuds d'accès, dans lequel les adresses IP sont fournies aux noeuds d'accès par un gestionnaire d'adresses IP (180), dans lequel le nombre d'adresses IP requis par un noeud d'accès (120) de la pluralité de noeuds d'accès varie dans le temps, dans lequel, de ce fait, des adresses IP sont affectées au noeud d'accès (120) de la pluralité de noeuds d'accès et désaffectées de celui-ci, par le gestionnaire d'adresses IP (180), en fonction de la variation dans le temps des adresses IP demandées par le noeud d'accès (120), dans lequel le réseau de télécommunications (100) est conçu de manière que :
- le noeud d'accès (120) de la pluralité de noeuds d'accès ou le gestionnaire d'adresses IP (180) détecte que des adresses IP supplémentaires sont requises ou seront requises pour les équipements de locaux clients (20) connectés ou allant probablement être connectés au réseau de télécommunications (100) par le biais du noeud d'accès (120),
- le noeud d'accès (120) de la pluralité de noeuds d'accès envoie une demande d'affectation d'adresses IP au gestionnaire d'adresses IP (180) aux fins de l'affectation d'adresses IP supplémentaires, la demande d'affectation d'adresses IP comportant une indication se rapportant à l'augmentation par intervalle de temps des adresses IP requises au niveau du noeud d'accès (120), dans lequel l'indication se rapporte à la vitesse d'augmentation des adresses IP requises au niveau du noeud d'accès (120) de la pluralité de noeuds d'accès, ou le gestionnaire d'adresses IP (180) détecte l'augmentation par intervalle de temps des adresses IP requises au niveau du noeud d'accès (120), dans lequel le gestionnaire d'adresses IP (180) détecte la vitesse d'augmentation des adresses IP requises au niveau du noeud d'accès (120),
- lors d'une troisième étape, des adresses IP sont affectées au noeud d'accès (120) de la pluralité de noeuds d'accès par le gestionnaire d'adresses IP (180), en fonction de la demande d'affectation d'adresses IP, dans lequel, en fonction de :
- soit la demande d'affectation d'adresses IP et l'indication se rapportant à la vitesse d'augmentation des adresses IP requises au niveau du noeud d'accès (120) de la pluralité de noeuds d'accès,
- soit la détection par le gestionnaire d'adresses IP (180) de la vitesse d'augmentation des adresses IP requises au niveau du noeud d'accès (120), des adresses IP sont affectées en plus au noeud d'accès (120) par le gestionnaire d'adresses IP (180), les adresses IP affectées en plus comprenant :
- un nombre variable de blocs d'adresses IP ou
- un bloc d'adresses IP comprenant un nombre variable d'adresses IP,
dans lequel :
- à la réception d'une nouvelle demande d'adresses IP, au niveau du noeud d'accès (120) de la pluralité de noeuds d'accès, en provenance d'un équipement de locaux client (20) au moins connecté indirectement au noeud d'accès **(120),** et
- dans le cas d'au moins une adresse IP disponible dans une pluralité de blocs d'adresses IP affectées au noeud d'accès (120),
la priorité est accordée à une adresse IP disponible dans un bloc fixe d'adresses IP, afin qu'elle soit utilisée pour la nouvelle demande d'adresses IP plutôt qu'une adresse IP disponible dans un bloc dynamique d'adresses IP, et la priorité est accordée à une adresse IP disponible dans un bloc dynamique d'adresses IP plus complètement utilisé, afin qu'elle soit utilisée pour la nouvelle demande d'adresses IP, plutôt qu'une adresse IP disponible dans un bloc dynamique d'adresses IP moins complètement utilisé.

8. Programme comprenant un code de programme lisible par ordinateur, qui, lorsqu'il est exécuté sur un ordinateur et/ou sur un noeud d'accès (120) d'un réseau de télécommunications (100) et/ou dans un gestionnaire d'adresses IP (180) du réseau de télécommunications (100), en particulier en partie sur un noeud d'accès (120) et en partie dans un gestionnaire d'adresses IP (180), fait mettre en oeuvre à l'ordinateur et/ou au noeud d'accès (120) du réseau de télécommunications (100) et/ou au gestionnaire d'adresses IP (180) un procédé selon l'une des revendications 1 à 6.

9. Produit-programme informatique destiné à utiliser un réseau de télécommunications (100), le produit-programme informatique comprenant un programme informatique stocké sur un support de stockage, le programme informatique comprenant un code de programme qui, lorsqu'il est exécuté sur un ordinateur et/ou sur un noeud d'accès (120) d'un réseau de télécommunications (100) et/ou dans un gestionnaire d'adresses IP (180) du réseau de télécommunications (100), en particulier en partie sur un noeud d'accès (120) et en partie dans un gestionnaire d'adresses IP (180), fait mettre en oeuvre à l'ordinateur et/ou au noeud d'accès (120) du réseau de télécommunications (100) et/ou au gestionnaire d'adresses IP (180) un procédé selon l'une des revendications 1 à 6.
